# EUROPEAN PATENT APPLICATION

(11) **EP 4 156 369 A1**
(43) Date of publication of application: **29.03.2023**
(21) Application number: 21927080.8
(22) Date of filing: 28.07.2021
(51) Int. Cl.: H01M 10/12

(54) **BATTERY, ELECTRICAL DEVICE, METHOD FOR PREPARING BATTERY, AND APPARATUS FOR PREPARING BATTERY**

(71) Applicant: Contemporary Amperex Technology Co., Limited, Fujian 352100 (CN)
(72) Inventor: TANG, Yu, Ningde Fujian 352100 (CN); ZENG, Zhimin, Ningde Fujian 352100 (CN); YANG, Haiqi, Ningde Fujian 352100 (CN); HUANG, Xiaoteng, Ningde Fujian 352100 (CN); WANG, Peng, Ningde Fujian 352100 (CN)
(74) Representative: Rowlands, Stuart Michael
(86) International application number: PCT/CN2021/109066
(87) International publication number: WO 2023/004648

(57) **Abstract**

Examples of the present application provide a battery, a powered device, and a method and device for preparing a battery. The battery includes battery cells; a box body; and a partition assembly configured to partition the box body into a first accommodating portion and a second accommodating portion, wherein the first accommodating portion is configured to accommodate an electrical component, the second accommodating portion is configured to accommodate the battery cells, a communication portion is formed in the partition assembly, the electrical component and the battery cells are electrically connected via a connecting component, the connecting component penetrates the communication portion, the partition assembly has a first partition component and a second partition component that are connected, and the communication portion is formed by assembling the first partition component and the second partition component.

## Description

### Technical Field

The present application relates to the field of energy storage devices, and more particularly, to a battery, a powered device, a method for preparing a battery, and a device for preparing a battery.

### Background Art

Energy saving and emission reduction is the key to sustainable development of the automobile industry. In this case, electric vehicles have become an important part of the sustainable development of the automobile industry because of their advantages of energy saving and environmental protection. For electric vehicles, the battery technology is an important factor that is vital to its development.

With the continuous development of the battery technology, higher requirements are placed on the performance of the battery, and it is expected that the battery can consider various design factors at the same time.

### Summary of the Invention

The present application provides a battery, a powered device, a method for preparing a battery, and a device for preparing a battery, so as to improve the safety of the battery.

In a first aspect, a battery is provided, including: battery cells; a box body; and a partition assembly configured to partition the box body into a first accommodating portion and a second accommodating portion, wherein the first accommodating portion is configured to accommodate an electrical component, the second accommodating portion is configured to accommodate the cells, a communication portion is formed in the partition assembly, the electrical component and the cells are electrically connected via a connecting component, the connecting component penetrates the communication portion, the partition assembly has a first partition component and a second partition component that are connected, and the communication portion is formed by assembling the first partition component and the second partition component.

In the battery, the battery cells and a high-voltage and low-voltage electrical component are accommodated in the box body. When a battery cell is damaged or the like, the high-temperature and high-pressure emissions released from the battery cell may have adverse effects on the electrical component, and may even cause problems such as fire and explosion.

In the technical solution of the example of the present application, the box body is divided by the partition assembly into the first accommodating portion configured to accommodate the electrical component and the second accommodating portion configured to accommodate the battery cells, so that even if a cell is damaged and emits high-temperature and high-pressure emissions, the emissions may also be blocked by the partition assembly to prevent the impact on the electrical component and increase the safety of the battery. Furthermore, the partition component is formed of the first partition component and the second partition component, the installation performance of the partition assembly can be improved, and the box body having the partition assembly can be efficiently produced. In order to electrically connect the electrical component accommodated in the first accommodating portion and the battery cells accommodated in the second accommodating portion, it is necessary to form a communication portion in the partition assembly, so that the electrically connected components pass through the communication portion. In the present application, the communication portion is formed by assembling the first partition component and the second partition component. As a result, compared with the method of directly digging a through hole or the like in an integral partition assembly, the state of the communication portion can be observed intuitively and easily, and the connecting component can be easily and stably installed in the communication portion, thereby improving the assembling performance of the partition assembly and the entire box body, and improving the productivity.

In some examples, the first partition component and the second partition component are detachably connected. Thereby, the first partition component and the second partition component can be easily detached. Moreover, the first partition component and the second partition component can be respectively installed to an upper cover and a box shell of the box body, which can further improve the installation and detaching performance of the partition assembly.

In some examples, one of the first partition component and the second partition component is provided with a groove, an end of the groove is provided with an opening, and by assembling the first partition component and the second partition component, the opening is closed and the communication portion is formed.

In some examples, the groove penetrates one of the first partition component and the second partition component in a first direction.

In some examples, the opening is arranged at an end of one of the first partition component and the second partition component in a second direction, the second direction being perpendicular to the first direction.

Therefore, when the first partition component and the second partition component are not installed together, the state in the groove can be clearly observed, the connecting component can be simply placed in the groove, and only by cooperatively installing the first partition component and the second partition component, the opening of the groove of one partition component can be closed by a flat end face of the other partition component to form the communication portion, and the connecting component can be stably held.

In some examples, grooves are formed on both the first partition component and the second partition component, and by assembling the first partition component and the second partition component, the groove of the first partition component and the groove of the second partition component are arranged opposite to each other to form the communication portion. Therefore, the versatility of the first partition component and the second partition component can be improved, the installation operator does not need to spend time to confirm the vertical positional relationship of the two partition components, and the partition assembly can be installed more easily.

In some examples, the box body has an upper cover and a box shell that are connected, the first partition component is connected to the upper cover, and the second partition component is connected to the box shell. Therefore, it is clear that when the box body is vertically installed so that the upper cover is located above, the first partition component is located above and the second partition component is located below.

In some examples, the upper cover includes a first cover and a second cover, a space surrounded by the first cover, the partition assembly, and the box shell forms the first accommodating portion, and a space surrounded by the second cover, the partition assembly, and the box shell forms the second accommodating portion. In some examples, the first cover and the second cover are arranged separately from each other. The space in the box body is divided, by the partition assembly, into the first accommodating portion and the second accommodating portion which are independent of each other, and the first cover and the second cover are arranged separately. Therefore, when maintenance and replacement of the electrical component are required, only the first cover needs to be removed, which can reduce complicated operations and save operation space.

In some examples, the first partition component is sealed and fixed to the first cover and the second cover in a detachable manner. Therefore, it is clear that the first partition component is installed on both the first cover and the second cover, and it is ensured that the space in the box body can be partitioned into the first accommodating portion and the second accommodating portion by one partition assembly. When the first cover and the second cover have different heights, a height difference may be formed between a portion of the first partition component fixed to the first cover and a portion fixed to the second cover. Further, the first partition component is sealed with both the first cover and the second cover. Accordingly, when a battery cell in the second accommodating portion is destroyed and ejects high-temperature and high-pressure emissions, leakage to the outside of the box body from the connections between the first partition component and the first cover and the second cover can be prevented, and therefore, the safety of the battery as a whole can be improved.

In some examples, the second partition component is integrally formed with the box shell. As a result, the box body in which the second partition component has been formed can be provided at a raw material stage, thereby improving the processing and assembling efficiency of the partition assembly.

In some examples, the second partition component is fixed to the box shell in a detachable manner. Therefore, the freedom of assembly can be increased. For example, the first partition component and the second partition component can be pre-assembled together and then assembled to the box body, or the first partition component can be installed with respect to the second partition component after the second partition component has been installed to the box shell. The second partition component may also be sealed and fixed to the box shell.

In some examples, an installation component is provided in the communication portion, and the installation component is configured to install the connecting component. Therefore, the connecting component can be installed more stably by using the installation component, thus improving the assembling reliability.

In some examples, the installation component is configured to insulate the connecting component from the partition assembly. The connecting component in the present application includes a high-voltage cable, and by using the installation component to insulate the connecting component from the partition assembly, the insulation safety of the connecting component can be further improved.

In some examples, the installation component is engaged with the communication portion, and the installation component is provided with a snap recess, and the snap recess is configured to fix the connecting component. Therefore, the installation component is engaged with the communication portion and is snapped and fixed to the connecting component, so that the connecting component can be easily and stably installed.

One of the first partition component and the second partition component is provided with a positioning protrusion, and the other is provided with a positioning recess, and the positioning protrusion and the positioning recess extend in an extension direction of the partition assembly. The first partition component and the second partition component are assembled by fitting the positioning protrusion and the positioning recess. That is, in order to ensure the positioning accuracy of the first partition component and the second partition component, the partition components are provided with a recess and a protrusion for positioning. As a result, the assembling accuracy of the partition assembly can be improved.

In a second aspect, a powered device is provided, including the battery in the first aspect. The battery is configured to provide electrical energy.

In a third aspect, a method for preparing a battery is provided, including: providing battery cells; providing a box body; providing a partition assembly, wherein the partition assembly is configured to partition the box body into a first accommodating portion and a second accommodating portion, the first accommodating portion is configured to accommodate an electrical component, the second accommodating portion is configured to accommodate the battery cells, and the partition assembly has a first partition component and a second partition component that are connected; and installing the partition assembly to the box body, forming a communication portion in the partition assembly by assembling the first partition component and the second partition component, and electrically connecting the electrical component and the battery cells via a connecting component, wherein the connecting component penetrates through the communication portion.

In a fourth aspect, a device for preparing a battery is provided, including: a first providing module configured to provide battery cells; a second providing module configured to provide a box body; a third providing module configured to provide a partition assembly, wherein the partition assembly is configured to partition the box body into a first accommodating portion and a second accommodating portion, the first accommodating portion is configured to accommodate an electrical component, the second accommodating portion is configured to accommodate the battery cells, and the partition assembly has a first partition component and a second partition component that are connected; and an installing module configured to install the partition assembly to the box body, form a communication portion in the partition assembly by assembling the first partition component and the second partition component, and electrically connect the electrical component and the battery cells via a connecting component, wherein the connecting component penetrates through the communication portion.

### Description of Drawings

The accompanying drawings described herein are used for providing further understanding of the present application and constitute a part of the present application. The schematic examples and descriptions of the present application are used for explaining the present application and do not constitute an improper limitation to the present application. In the accompanying drawings:
Fig. 1 is a schematic diagram of a vehicle according to an example of the present application;
Fig. 2 is a schematic three-dimensional structural diagram of a battery according to an example of the present application;
Fig. 3 is a schematic structural diagram of a state in which an upper cover is removed in Fig.2;
Fig. 4(a) is a schematic structural diagram of a partition assembly, and Fig.4(b) is an enlarged diagram of a communication portion in a partition assembly;
Fig. 5(a) and Fig. 5(b) show other manners of assembling a first partition component and a second partition component to form a communication portion;
Fig. 6(a) to Fig. 6(d) are schematic diagrams illustrating a specific structure of an installation component;
Fig. 7 is a schematic diagram of a positioning structure of a first partition component and a second partition component;
Fig. 8 is a schematic structural diagram of an assembled state of the first partition component and the second partition component;
Fig. 9 is a schematic flowchart of a method for preparing a battery according to an example of the present application; and
Fig. 10 is a schematic block diagram of a device for preparing a battery according to an example of the present application.

### Detailed Description

In order to make the purposes, technical solutions, and advantages of the examples of the present application clearer, the technical solutions in the examples of the present application will be clearly described below with reference to the accompanying drawings in the examples of the present application. It is obvious that the described examples are some examples, rather than all examples of the present application. Based on the examples in the present application, all other examples obtained by those of ordinary skill in the art without creative efforts fall within the protection scope of the present application.

Unless otherwise defined, all technical and scientific terms used in the present application have the same meaning as commonly understood by those skilled in the art to which the present disclosure belongs; the terms used in the specification of the application in the present application are for the purpose of describing specific examples only, and are not intended to limit the present application; the terms "including" and "having" and any variations thereof in the description and claims of the present application as well as in the above description of drawings are intended to cover a non-exclusive inclusion. The terms "first," "second," and the like in the description and claims of the present application or the above accompanying drawings are used for distinguishing different objects, rather than describing a specific order or primary and secondary relationship.

Reference to "an example" in the present application means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples. It is understood explicitly and implicitly by those skilled in the art that the examples described in the present application can be combined with other examples.

In the description of the present application, unless otherwise expressly specified and limited, terms "installation," "connected," "connect," and "attach" should be broadly understood, for example, they may be a fixed connection or a detachable connection or an integrated connection; or may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B indicates that there are three cases of A alone, A and B together, and B alone. In addition, the character "/" in the present application generally means that associated objects before and after it are in an "or" relationship.

In the present application, the term "plurality of" refers to two or more (including two), and similarly, "plurality of groups" refers to two or more (including two) groups, and "plurality of sheets" refers to two or more (including two) sheets.

The battery mentioned in examples of the present application refers to a single physical module including a plurality of battery cells to provide higher voltage and capacity. For example, the battery mentioned in the present application may include a battery module, a battery pack, or the like.

The battery cell includes an electrode assembly and an electrolyte solution, and the electrode assembly includes a positive electrode sheet, a negative electrode sheet, and a separator. The battery cell works mainly relying on the movement of metal ions between the positive electrode sheet and the negative electrode sheet. The positive electrode sheet includes a positive current collector and a positive active material layer, the positive active material layer is coated on a surface of the positive current collector, the current collector not coated with the positive active material layer protrudes from the current collector coated with the positive active material layer, and the positive active material layer not coated with the current collector is used as a positive tab. Taking a lithium-ion battery as an example, the material of the positive current collector may be aluminum, and the positive active material may be lithium cobalt oxide, lithium iron phosphate, ternary lithium, lithium manganate, or the like. The negative electrode sheet includes a negative current collector and a negative active material layer, the negative active material layer is coated on a surface of the negative current collector, the current collector not coated with the negative active material layer protrudes from the current collector coated with the negative active material layer, and the current collector not coated with the negative active material layer is used as a negative tab. The material of the negative current collector may be copper, and the negative active material may be carbon or silicon. In order to ensure that a large current is passed without fusing, there are a plurality of positive tabs and they are stacked together, and there are a plurality of negative tabs and they are stacked together. The material of the separator may be PP, PE, or the like. In addition, the electrode assembly may be of a wound structure or a laminated structure, which is not limited in the example of the present application.

The development of the battery technology needs to consider many design factors at the same time, such as energy density, cycle life, discharge capacity, charge-discharge rate, and other performance parameters. In addition, the safety of the battery also needs to be considered.

At present, a battery of an electric vehicle often requires dozens or even thousands of battery cells. Battery cells and various electrical components are accommodated in a box body of the battery. The electrical components include a bus component, high-voltage and low-voltage cables, and the like. When the battery is damaged due to abnormal conditions, high-temperature and high-pressure emissions may be released from the battery cell. If such emissions are directly sprayed on the electrical components, they will have adverse effects on the electrical components, and may even lead to an accident such as fire and explosion.

In view of the above, a battery is provided in the present application, including: battery cells; a box body; and a partition assembly configured to partition the box body into a first accommodating portion and a second accommodating portion, wherein the first accommodating portion is configured to accommodate an electrical component, the second accommodating portion is configured to accommodate the battery cells, a communication portion is formed in the partition assembly, the electrical component and the battery cells are electrically connected via a connecting component, the connecting component penetrates the communication portion, the partition assembly has a first partition component and a second partition component that are connected, and the communication portion is formed by assembling the first partition component and the second partition component.

The box body is divided by the partition assembly into the first accommodating portion configured to accommodate the electrical component and the second accommodating portion configured to accommodate the battery cells, so that even if a battery cell is damaged and emits high-temperature and high-pressure emissions, the emissions may also be blocked by the partition assembly to prevent the impact on the electrical component and increase the safety of the battery. Furthermore, the partition component is formed of the first partition component and the second partition component, the installation performance of the partition assembly can be improved, and the box body having the partition assembly can be efficiently produced. In order to electrically connect the electrical component accommodated in the first accommodating portion and the battery cells accommodated in the second accommodating portion, it is necessary to form a communication portion in the partition assembly, so that the electrically connected components pass through the communication portion. In the present application, the communication portion is formed by assembling the first partition component and the second partition component. As a result, compared with the method of directly digging a through hole or the like in an integral partition assembly, the state of the communication portion can be observed intuitively and easily, and the connecting component can be easily and stably installed in the communication portion, thereby improving the installation operability of the connecting component. Therefore, the assembling performance of the partition assembly and the entire box body can be improved, and the productivity can be improved.

A powered device is provided in an example of the present application, and a battery is configured to provide electrical energy.

The technical solutions described in the examples of the present application are all applicable to various devices using batteries, such as mobile phones, portable apparatuses, laptops, battery cars, electric toys, electric tools, electric vehicles, ships, spacecrafts, and the like. For example, the spacecrafts include airplanes, rockets, space shuttles, and spaceships.

It should be understood that the technical solutions described in the examples of the present application are not only applicable to the devices described above, but also applicable to all apparatuses using batteries. However, for the sake of brevity, the following examples are described by taking an electric vehicle as an example.

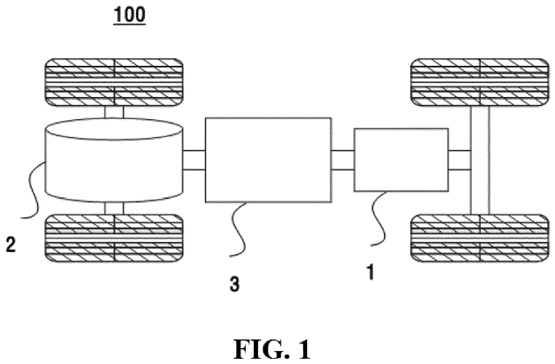

For example, as shown in Fig. 1, a schematic structural diagram of vehicle 100 according to an example of the application is shown. Vehicle 100 may be a fuel vehicle, a gas vehicle, or a new energy vehicle, and the new energy vehicle may be an all-electric vehicle, a hybrid electric vehicle, an extended range electric vehicle, or the like. The interior of vehicle 100 may be provided with motor 2, controller 3, and battery 1, and controller 3 is configured to control battery 1 to supply power to motor 2. For example, battery 1 may be arranged at the bottom or the head or tail of vehicle 100. Battery 1 may be configured for power supply of vehicle 100. For example, battery 1 may be used as an operating power source of vehicle 100, and configured for work electricity requirements of a circuit system of vehicle 100, for example, for starting, navigation, and operation of vehicle 100. In another example of the present application, battery 1 can not only be used as the operating power source of vehicle 100, but also can be used as a driving power source of vehicle 100 to provide driving power for vehicle 100 instead of or partially instead of fuel or natural gas.

In order to meet different power requirements, battery 1 may include a plurality of battery cells 10, where the plurality of cells 10 may be in series connection, in parallel connection, or in parallel-series connection, and the parallel-series connection refers to mixing of the series connection and the parallel connection.

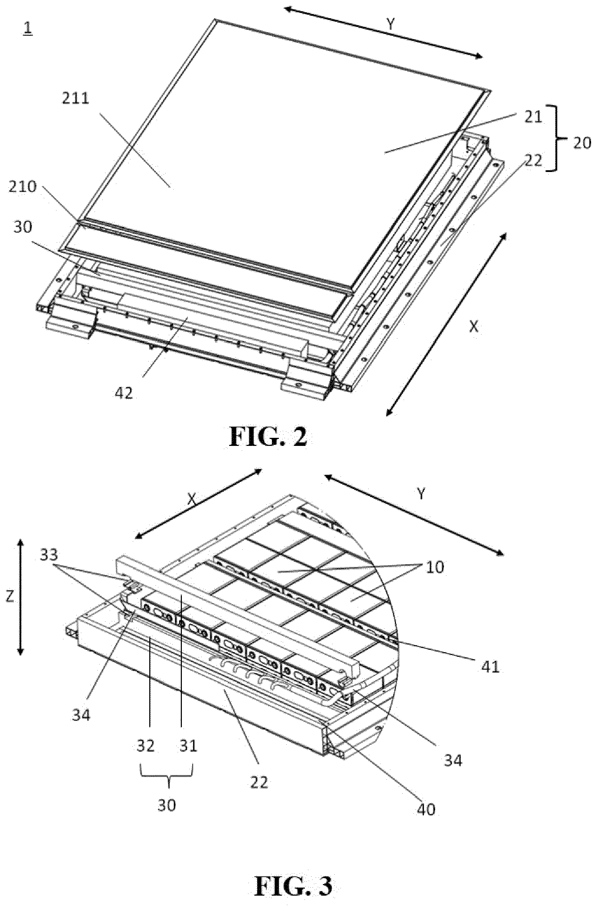

For example, as shown in Fig. 2, a schematic three-dimensional structural diagram of battery 1 according to an example of the present application is shown. Battery 1 includes box body 20, the interior of box body 20 is a hollow structure, and battery cells 10 (shown in Fig.3) are accommodated in box body 20. As shown in Fig.2, box body 20 may include two parts, which are referred to here as upper cover 21 and box shell 22 respectively. Upper cover 21 and box shell 22 are engaged together. The shape of upper cover 21 and box shell 22 may be determined according to the shape of a combination of the plurality of battery cells 10. For example, upper cover 21 and box shell 22 may each be a hollow cuboid with only one surface being an open surface, the opening of upper cover 21 and the opening of box shell 22 are arranged opposite to each other, and upper cover 21 and box shell 22 are mutually engaged to form box body 20 with a closed chamber. It is also possible that upper cover 21 is a rectangular parallelepiped with an opening and box shell 22 is a plate shape, or box shell 22 is a rectangular parallelepiped with an opening and upper cover 21 is a plate shape. Upper cover 21 and box shell 22 are oppositely arranged and engaged to form box body 20 with a closed chamber.

As shown in Fig. 3, a schematic structural diagram of a state in which upper cover 21 is removed in Fig. 2 is shown. Battery 1 has a plurality of battery cells 10, and the plurality of battery cells 10 can be arranged in first direction X and second direction Y, where first direction X and second direction Y are orthogonal. That is, the plurality of battery cells 10 in battery 1 may be arranged in a matrix-like structure. Optionally, battery 1 may also have only one battery cell 10, or have a plurality of cells 10 arranged in first direction X, or have a plurality of battery cells 10 arranged in second direction Y. After the plurality of battery cells 10 are connected in parallel or in series or in a parallel-series combination, they are placed in box body 20 formed after upper cover 21 and box shell 22 are engaged together.

As shown in Fig. 3, box body 20 can be divided into first accommodating portion 40 and second accommodating portion 41 by partition assembly 30. First accommodating portion 40 is configured to store electrical component 42 and second accommodating portion 41 is configured to store battery cells 10. As shown in Fig. 2, upper cover 21 includes first cover 210 and second cover 211. Therefore, a space surrounded by first cover 210, partition assembly 30, and box shell 22 forms first accommodating portion 40, and a space surrounded by second cover 211, partition assembly 30, and box shell 22 forms second accommodating portion 41. First cover 210 and second cover 211 are arranged separately from each other. In order to communicate first accommodating portion 40 and second accommodating portion 41, communication portion 33 is formed in partition assembly 30, electrical component 42 and battery cells 10 are electrically connected via connecting component 34, and connecting component 34 penetrates through communication portion 33.

In the present application, box body 20 is divided by partition assembly 30 into first accommodating portion 40 configured to accommodate electrical component 42 and second accommodating portion 41 configured to accommodate battery cells 10, so that even if cell 10 is damaged and emits high-temperature and high-pressure emissions, the emissions may also be blocked by partition assembly 30 to prevent the impact on electrical component 42 and increase the safety of battery 1.

Moreover, the space in box body 20 is divided, by first cover 210, second cover 211, and partition assembly 30, into first accommodating portion 40 and second accommodating portion 41 which are independent of each other, and first cover 210 and second cover 211 are arranged separately. Therefore, when maintenance and replacement of electrical component 42 are required, only first cover 210 needs to be removed, which can reduce complicated operations and save operation space.

As shown in Fig. 3, partition assembly 30 has first partition component 31 and second partition component 32. First partition component 31 is connected to upper cover 21, and second partition component 32 is connected to box shell 22. That is, when box body 20 is arranged in third direction Z so that upper cover 21 is located above, first partition component 31 is located above, and second partition component 32 is located below.

First partition component 31 is sealed and fixed to first cover 210 and second cover 211 in a detachable manner. In third direction Z, when first cover 210 and second cover 211 have different heights, a height difference may be formed between the part of first partition component 31 fixed to first cover 210 and the part fixed to second cover 211. Also, first partition component 31 is sealed with both first cover 210 and second cover 211, for example, by coating a sealant, by a seal liner, or the like. Accordingly, when battery cell 10 in second accommodating portion 41 is destroyed and ejects high-temperature and high-pressure emissions, leakage to the outside of box body 20 from the connections between first partition component 31 and first cover 210 and second cover 211 can be prevented, and therefore, the safety of battery 1 as a whole can be improved.

Second partition component 32 may be integrally formed with box shell 22. As a result, box body 20 in which second partition component 32 has been formed can be provided at a raw material stage, thereby improving the processing and assembling efficiency of partition assembly 30. Alternatively, second partition component 32 may also be fixed to box shell 22 in a detachable manner. Therefore, the freedom of assembly can be increased. For example, first partition component 31 and second partition component 32 can be pre-assembled together and then assembled to box body 20, or first partition component 31 can be installed with respect to second partition component 32 after second partition component 32 has been installed to box shell 22. Second partition component 32 may also be sealed and fixed to box shell 22.

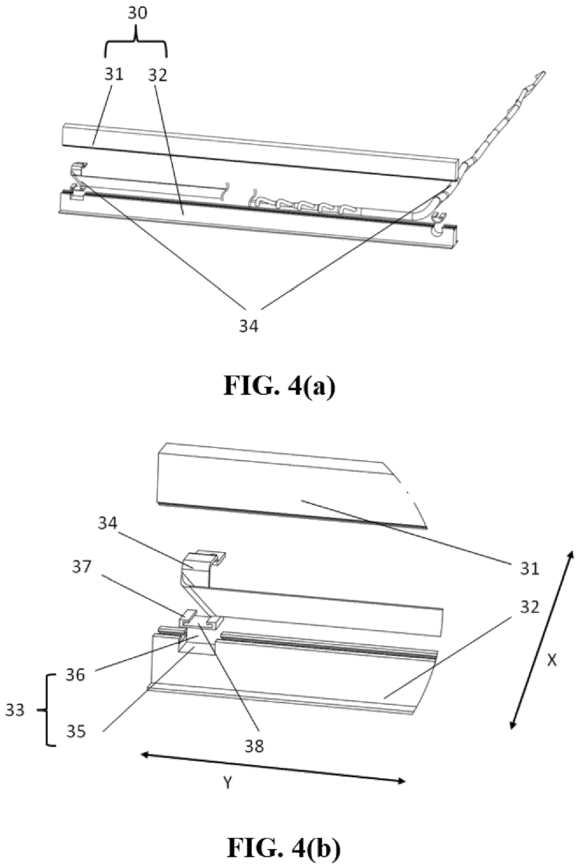

As shown in Fig. 4(a), a schematic structural diagram of partition assembly 30 is shown. Fig. 4(a) shows a configuration in which partition assembly 30 has two communication portions 33 through which a high-pressure connecting component and a low-pressure connecting component pass respectively. As shown in Fig. 4(b), one communication portion 33 in partition assembly 30 is enlarged, and the other communication portion 33 has a similar structure, so the description is omitted. In addition, the number of communication portions 33 in partition assembly 30 is not limited, and may be provided according to the design of connecting component 34.

As shown in Fig. 4(b), partition assembly 30 has first partition component 31 and second partition component 32. In order to communicate first accommodating portion 40 and second accommodating portion 41, communication portion 33 is formed in partition assembly 30, and connecting component 34 penetrates through communication portion 33 in first direction X. First partition component 31 and second partition component 32 are connected in a detachable manner. Therefore, first partition component 31 and second partition component 32 can be easily detached. Communication portion 33 is formed by assembling first partition component 31 and second partition component 32.

In the method of forming the communication portion by opening a through hole in the integrated partition assembly, the operator needs to insert the connecting component into the communication portion by experience, and cannot intuitively see the condition inside the communication portion, and cannot determine whether the connecting component is stably fixed. In the present application, however, communication portion 33 is formed by assembling first partition component 31 and second partition component 32, so that the state of communication portion 33 can be observed intuitively and easily, and connecting component 34 can be easily and stably arranged on communication portion 33; therefore, the assembling performance of partition assembly 30 and entire box body 20 can be improved, thereby improving the productivity.

As a method of forming communication portion 33 by assembling first partition component 31 and second partition component 32, for example, as shown in Fig. 4(b), second partition component 32 is provided with groove 35, an end of groove 35 has opening 36, groove 35 penetrates second partition component 32 in first direction X, and opening 36 is arranged at an end of second partition component 32 in second direction Y. Second direction Y is the extending direction of partition assembly 30, and second direction Y is orthogonal to first direction X. By assembling first partition component 31 and second partition component 32, opening 36 of groove 35 of second partition component 32 is closed by a flat end surface of first partition component 31 to form communication portion 33.

Installation component 37 is arranged in communication portion 33, and installation component 37 is configured to install connecting component 34. Furthermore, installation component 37 can insulate connecting component 34 from partition assembly 30. Therefore, the insulation safety of connecting component 34 can be further improved.

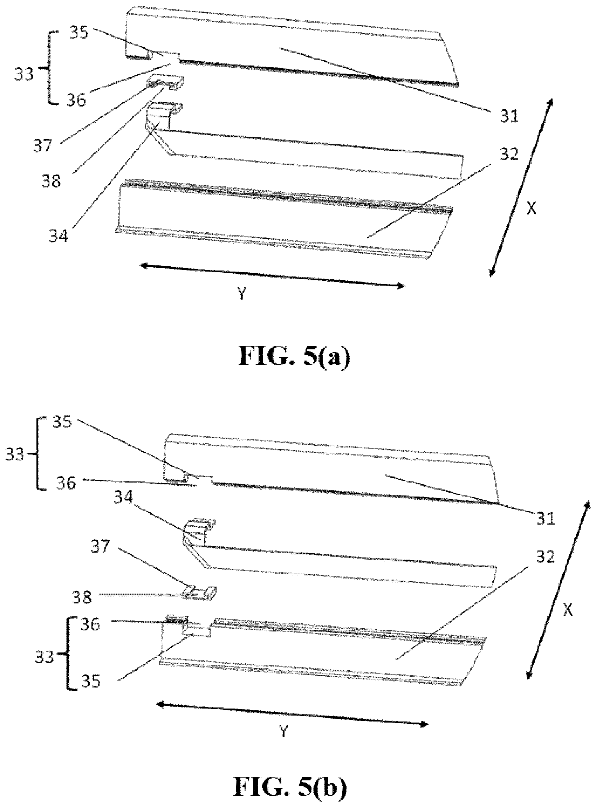

Fig. 5(a) and Fig. 5(b) show other manners of assembling first partition component 31 and second partition component 32 to form communication portion 33.

As shown in Fig. 5(a), first partition component 31 is provided with groove 35, an end of groove 35 has opening 36, groove 35 penetrates first partition component 31 in first direction X, and opening 36 is arranged at an end of first partition component 31 in second direction Y. Therefore, by assembling first partition component 31 and second partition component 32, opening 36 of groove 35 of first partition component 31 is closed by a flat end surface of second partition component 32 to form communication portion 33.

As shown in Fig.5(b), first partition component 31 and second partition component 32 are both provided with grooves 35, an end of each groove 35 has opening 36, grooves 35 penetrate first partition component 31 and second partition component 32 in first direction X, and openings 36 are arranged at ends of first partition component 31 and second partition component 32 in second direction Y. Therefore, by assembling first partition component 31 and second partition component 32, groove 35 of first partition component 31 and groove 35 of second partition component 32 are arranged opposite to each other, thus forming communication portion 33.

In the examples shown in Fig.4(b) and Fig.5(a), when first partition component 31 and second partition component 32 are not installed together, the state in groove 35 can be clearly observed, connecting component 34 can be simply placed in groove 35, and only by cooperatively installing first partition component 31 and second partition component 32, the opening of groove 35 of one partition component can be closed by a flat end face of the other partition component to form communication portion 33, and connecting component 34 can be stably held.

In particular, in the example shown in Fig. 5(b), grooves 35 are formed on both first partition component 31 and second partition component 32, and by assembling first partition component 31 and second partition component 32, groove 35 of first partition component 31 and groove 35 of second partition component 32 are arranged opposite to each other to form communication portion 33. Therefore, the versatility of first partition component 31 and second partition component 32 can be improved, the installation operator does not need to spend time to confirm the vertical positional relationship of the two partition components, and partition assembly 30 can be installed more easily.

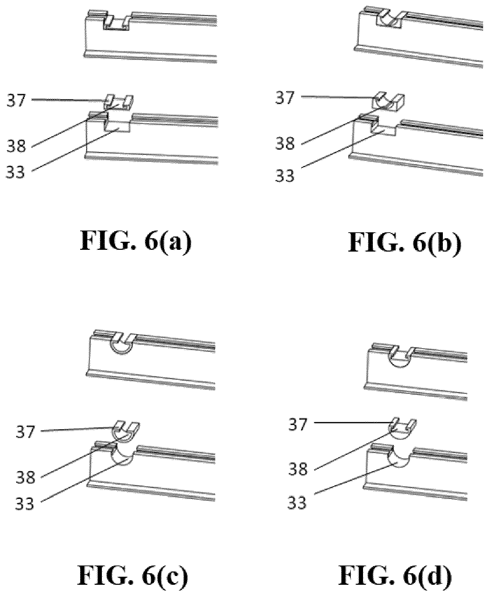

The structure of installation component 37 is shown in Fig. 4(a) and Fig. 4(b), and the specific structure of installation component 37 will be further described with reference to Fig. 6(a) to Fig. 6(d). Installation component 37 is engaged with communication portion 33, and installation component 37 is provided with snap recess 38, and snap recess 38 is configured to fix connecting component 34. As a result, as shown in Figs. 6(a) to (d), an outer surface of installation component 37 is engaged with communication portion 33, and an inner surface of installation component 37 is provided with snap recess 38 that matches the outer shape of connecting component 34, so that connecting component 34 is fixed with a snap; therefore, connecting component 34 can be easily and stably installed and the insulation may be enhanced. In Fig. 6(a), the structure of installation component 37 when communication portion 33 is a square hole and the external shape of connecting component 34 is a square is shown. In Fig. 6(b), the structure of installation component 37 when communication portion 33 is a square hole and the external shape of connecting component 34 is an arc shape is shown. In Fig. 6(c), the structure of installation component 37 when communicating portion 33 is an arc-shaped hole and the external shape of connecting component 34 is an arc shape is shown. In Fig. 6(d), the structure of installation component 37 when communication portion 33 is an arc-shaped hole and the external shape of connecting component 34 is a square shape is shown. The shape of communication portion 33 and connecting component 34 is not limited to the square and arc shape shown in the drawings, and may be formed in any shape, as long as the outer surface of installation component 37 is engaged with communication portion 33 and snap recess 38 is engaged with connecting component 34.

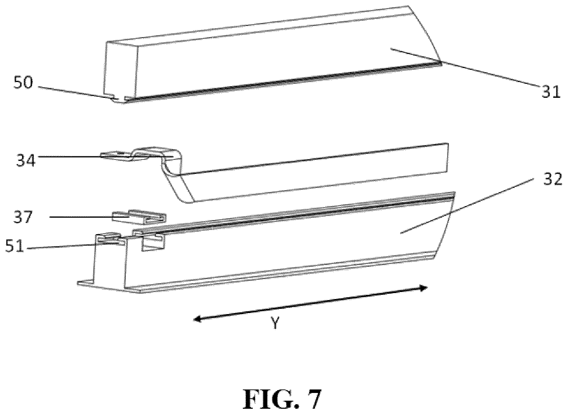

As shown in Fig. 7, a schematic diagram of a positioning structure of first partition component 31 and second partition component 32 is shown. First partition component 31 is provided with positioning protrusion 50, and second partition component 32 is provided with positioning recess 51, and positioning protrusion 50 and positioning recess 51 extend in an extension direction (i.e., second direction Y) of partition assembly 30. First partition component 31 and second partition component 32 are assembled by fitting positioning protrusion 50 and positioning recess 51. As a result, the positioning accuracy between first partition component 31 and second partition component 32 in partition assembly 30 can be improved. In addition, positioning recess 51 may be formed in first partition component 31, and positioning protrusion 50 may be formed in second partition component 32.

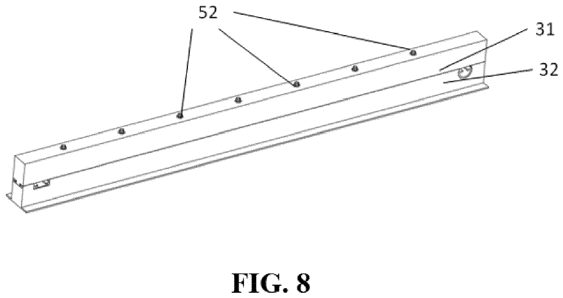

As shown in Fig. 8, a schematic structural diagram of an assembled state of first partition component 31 and second partition component 32 is shown. The illustration of connecting component 34 is omitted. As shown in Fig.8, first partition component 31 and second partition component 32 are fastened and fixed with bolts 52. However, the fixing method of partition assembly 30 is not limited to this, and other methods, such as bonding and riveting, can be used as long as first partition component 31 and second partition component 32 can be firmly fixed.

A powered device is further provided in an example of the present application, and the powered device includes battery 1 in various examples described above. Battery 1 is used in the powered device, for providing electrical energy.

The battery and the powered device of the examples of the present application are described above, and the method and device for preparing a battery of the examples of the present application will be described below. For the parts not described in detail, reference may be made to the foregoing examples.

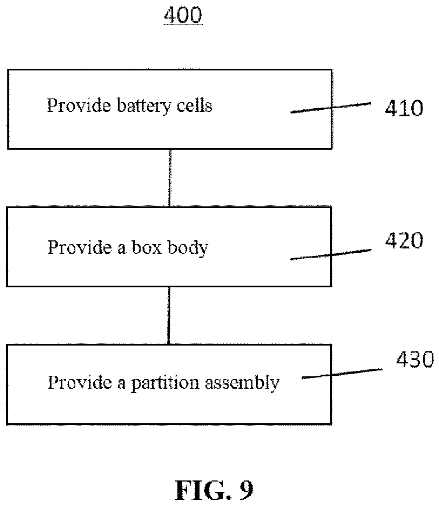

Fig. 9 is a schematic flowchart of method 400 for preparing a battery according to an example of the present application. As shown in Fig. 9, method 400 may include:
410: providing battery cells 10;
420: providing box body 20; and
430: providing partition assembly 30, wherein partition assembly 30 is configured to partition box body 20 into first accommodating portion 40 and second accommodating portion 41, first accommodating portion 40 is configured to accommodate electrical component 42, second accommodating portion 41 is configured to accommodate battery cells 10, and partition assembly 30 has first partition component 31 and second partition component 32 that are connected; and
installing battery cells 10 and partition assembly 30 to box body 20, forming communication portion 33 in partition assembly 30 by assembling first partition component 31 and second partition component 32, and electrically connecting electrical component 42 and battery cells 10 via connecting component 34, wherein connecting component 34 penetrates through communication portion 33.

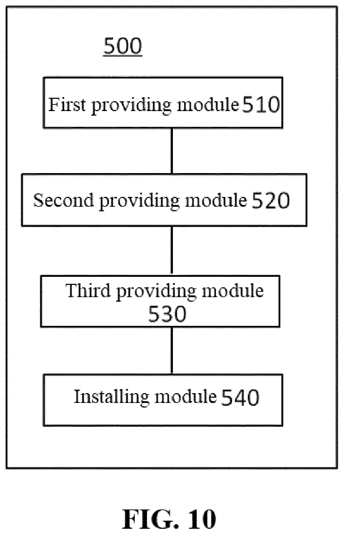

Fig. 10 is a schematic block diagram of device 500 for preparing a battery according to an example of the present application. As shown in Fig. 10, device 500 for preparing a battery may include:
first providing module 510 configured to provide battery cells 10;
second providing module 520 configured to provide box body 20;
third providing module 530 configured to provide partition assembly 30, wherein partition assembly 30 is configured to partition box body 20 into first accommodating portion 40 and second accommodating portion 41, first accommodating portion 40 is configured to accommodate electrical component 42, second accommodating portion 41 is configured to accommodate battery cells 10, and partition assembly 30 has first partition component 31 and second partition component 32 that are connected; and
installing module 540 configured to install battery cells 10 and partition assembly 30 to box body 20, form communication portion 33 in partition assembly 30 by assembling first partition component 31 and second partition component 32, and electrically connect electrical component 42 and battery cells 10 via connecting component 34, wherein connecting component 34 penetrates through communication portion 33.

Finally, it should be noted that the above examples are merely used for illustrating rather than limiting the technical solutions of the present application. Although the present application has been described in detail with reference to the above various examples, those of ordinary skill in the art should understood that the technical solutions specified in the above various examples can still be modified, or some of the technical features therein can be equivalently substituted. However, such modifications or substitutions do not make the essence of the corresponding technical solutions depart from the scope of the technical solutions of the various examples of the present application.

## Claims

1. A battery, comprising:
battery cells;
a box body; and
a partition assembly configured to partition the box body into a first accommodating portion and a second accommodating portion,
the first accommodating portion is configured to accommodate an electrical component, the second accommodating portion is configured to accommodate the battery cells,
a communication portion is formed in the partition assembly, the electrical component and the battery cells are electrically connected via a connecting component, the connecting component penetrates the communication portion,
the partition assembly has a first partition component and a second partition component that are connected, and the communication portion is formed by assembling the first partition component and the second partition component.

2. The battery according to claim 1, wherein
the first partition component and the second partition component are connected in a detachable manner.

3. The battery according to claim 1 or 2, wherein
one of the first partition component and the second partition component is provided with a groove, an end of the groove is provided with an opening, and by assembling the first partition component and the second partition component, the opening is closed and the communication portion is formed.

4. The battery according to claim 3, wherein
the groove penetrates one of the first partition component and the second partition component in a first direction.

5. The battery according to claim 4, wherein
the opening is arranged at an end of one of the first partition component and the second partition component in a second direction, the second direction being perpendicular to the first direction.

6. The battery according to claim 1 or 2, wherein
grooves are formed on both the first partition component and the second partition component, and by assembling the first partition component and the second partition component, the groove of the first partition component and the groove of the second partition component are arranged opposite to each other to form the communication portion.

7. The battery according to any one of claims 1 to 6, wherein
the box body has an upper cover and a box shell that are connected, the first partition component is connected to the upper cover, and the second partition component is connected to the box shell.

8. The battery according to claim 7, wherein
the upper cover comprises a first cover and a second cover,
a space surrounded by the first cover, the partition assembly, and the box shell forms the first accommodating portion, and
a space surrounded by the second cover, the partition assembly, and the box shell forms the second accommodating portion.

9. The battery according to claim 8, wherein
the first cover and the second cover are arranged separately from each other.

10. The battery according to claim 8 or 9, wherein
the first partition component is sealed and fixed to the first cover and the second cover in a detachable manner.

11. The battery according to any one of claims 7 to 10, wherein
the second partition component is integrally formed with the box shell.

12. The battery according to any one of claims 7 to 10, wherein
the second partition component is fixed to the box shell in a detachable manner.

13. The battery according to any one of claims 1 to 12, wherein
an installation component is provided in the communication portion, and the installation component is configured to install the connecting component.

14. The battery according to claim 13, wherein
the installation component is configured to insulate the connecting component from the partition assembly.

15. The battery according to claim 13 or 14, wherein
the installation component is engaged with the communication portion,
and the installation component is provided with a snap recess, and the snap recess is configured to fix the connecting component.

16. The battery according to any one of claims 1 to 15, wherein
one of the first partition component and the second partition component is provided with a positioning protrusion, and the other is provided with a positioning recess, and the positioning protrusion and the positioning recess extend in an extension direction of the partition assembly, and
the first partition component and the second partition component are assembled by fitting the positioning protrusion and the positioning recess.

17. A powered device comprising the battery according to any one of claims 1 to 16, wherein the battery is configured to provide electrical energy.

18. A method for preparing a battery, comprising:
providing battery cells;
providing a box body;
providing a partition assembly, wherein the partition assembly is configured to partition the box body into a first accommodating portion and a second accommodating portion, the first accommodating portion is configured to accommodate an electrical component, the second accommodating portion is configured to accommodate the battery cells, and the partition assembly has a first partition component and a second partition component that are connected; and
installing the partition assembly to the box body, forming a communication portion in the partition assembly by assembling the first partition component and the second partition component, and electrically connecting the electrical component and the battery cells via a connecting component, wherein the connecting component penetrates through the communication portion.

19. A device for preparing a battery, comprising:
a first providing module configured to provide battery cells;
a second providing module configured to provide a box body;
a third providing module configured to provide a partition assembly, wherein the partition assembly is configured to partition the box body into a first accommodating portion and a second accommodating portion, the first accommodating portion is configured to accommodate an electrical component, the second accommodating portion is configured to accommodate the battery cells, and the partition assembly has a first partition component and a second partition component connected together; and
an installing module configured to install the partition assembly to the box body, form a communication portion in the partition assembly by assembling the first partition component and the second partition component, and electrically connect the electrical component and the battery cells via a connecting component, wherein the connecting component penetrates through the communication portion.
